# EUROPEAN PATENT APPLICATION

(11) **EP 4 582 973 A1**
(43) Date of publication of application: **09.07.2025**
(21) Application number: 25150001.3
(22) Date of filing: 01.01.2025
(51) Int. Cl.: G06F 16/3329

(54) **METHOD AND SYSTEM FOR GENERATING INDEXED CORPUS FOR DOMAIN-DRIVEN KNOWLEDGE AUGMENTED QUESTION ANSWERING**

(30) Priority: 08.01.2024 IN 202421001329
(71) Applicant: Tata Consultancy Services Limited, Maharashtra (IN)
(72) Inventor: RATH, PURNENDU KUMAR, 700160 Kolkata, West Bengal (IN); DAS, PRASENJIT, 700160 Kolkata, West Bengal (IN); BASAVARSU, PURUSHOTTHAM GAUTHAM, 411057 Pune, Maharashtra (IN)
(74) Representative: Goddar, Heinz J.

(57) **Abstract**

Existing question answering approaches have the disadvantages that they possess limited contextual understanding due to which the retrieval process they use is inefficient in nature. Embodiments disclosed herein provide a method and system for domain-driven knowledge augmented question answering. The system receives a raw corpus data as input, wherein the raw corpus data is a domain specific data. Further, an indexed corpus is generated from the raw corpus data, during which a document chunking approach is used. The indexed corpus is then used for processing received queries received, in order to generate response to the received user queries.

## Description

### CROSS-REFERENCE TO RELATED APPLICATIONS AND PRIORITY

The present application claims priority to Indian application no. 202421001329, filed on January 08, 2024.

### TECHNICAL FIELD

The disclosure herein generally relates to data processing, and, more particularly, to method and system for domain-driven knowledge augmented question answering.

### BACKGROUND

The proliferation of Large Language Models (LLMs) has led to an abundance of knowledge available at fingertips to ordinary users across diverse domains. However, to use this knowledge in critical situations and towards semi-automated decision making, it must be structured and have better trustworthiness.

In the age of information, quick and accurate access to knowledge is of paramount importance. Question-Answering (QA) systems play a pivotal role in this endeavor. These systems, powered by advanced architectures, enable users to obtain precise answers to their queries. One such architecture, driven by the understanding of specific domains, bridges the gap between raw data and insightful responses. However, the existing approaches have the disadvantage that they possess limited contextual understanding due to which the retrieval process they use is inefficient in nature.

### SUMMARY

Embodiments of the present disclosure present technological improvements as solutions to one or more of the above-mentioned technical problems recognized by the inventors in conventional systems. For example, in one embodiment, a processor implemented method is provided. The method includes receiving a raw corpus data as input, wherein the raw corpus data is a domain specific data. Further, an indexed corpus is generated from the raw corpus data, wherein generating the indexed corpus includes: transforming the raw corpus data into an associated plain text document, wherein file type of the associated plain text document is determined based on a determined file type of the raw corpus data; normalizing the associated plain text document, comprising standardizing and cleaning the plain text document; generating a plurality of document chunks associated with the normalized associated plain text document by determining a document type of the plain text document based on a calculated keyword score and a large language model (LLM) score and performing a section-based chunking, a paragraph-based chunking and a sentence-based chunking on the plain text document to obtain the plurality of document chunks, based on the determined document type; generating a plurality of domain centric chunks from the plurality of document chunks using a domain model graph and the LLM, wherein the domain model graph comprises a set of associations and a root node; aggregating the plurality of domain centric chunks by grouping similar chunks from the plurality of domain centric chunks; and generating the indexed corpus by performing indexing on the aggregated plurality of domain centric chunks using vector embeddings.

In an embodiment of the method, the raw corpus data comprises of a collection of textual data pertaining to a specific domain, wherein the textual data may comprise journals, papers, data sources, and legal documents.

In another embodiment of the method, determining the document type of the plain text document based on the calculated keyword score and the large language model (LLM) score includes: calculating a keyword match score for each document type based on a keyword match count and a total number of keywords for each document type using a pre-defined dictionary of keywords associated with each document type; creating a prompt using a pre-defined number of tokens from the plain text document; and prompting the LLM using the created prompt to obtain the LLM score for each document type, wherein prompting the LLM includes: calculate a mean score for each document type using the LLM score and the keyword match score; and identify the document type with highest mean score from among a plurality of document types.

In another embodiment of the method, performing the section-based chunking, the paragraph-based chunking, and the sentence-based chunking on the plain text document to obtain the plurality of document chunks, based on the determined document type, includes: dividing the plain text document into a plurality of sections using a predefined template; identifying a plurality of paragraphs if a section amongst the plurality of sections exceeds a predefined section size; and identifying a plurality of sentences if a paragraph amongst the plurality of paragraphs exceeds a predefined paragraph size, wherein, the plurality of sections, the plurality of paragraphs, and the plurality of sentences form the plurality of document chunks.

In another embodiment of the method, generating the plurality of domain centric chunks from the plurality of document chunks using the domain model graph and the LLM, comprises performing a depth first search (DFS) on the domain model graph by traversing a set of associations and using a set of prompts to generate the plurality of document chunks.

In another embodiment of the method, the generated index corpus is used to generate response to one or more user queries, by: receiving the one or more user queries with respect to a specific domain; validating and refining the one or more user queries using the domain model graph and the LLM score, by collecting a list of key entities and immediate neighbors from the domain model graph, generating the keyword score if one or more of the key entities are present in the one or more user queries, generate the LLM score using a prompt, find a weighted mean score from the keyword score and the LLM score, determining each of the one or more user queries as valid, if the weighted mean score is greater than a predefined threshold, and refining the validated query using the LLM with prompt; classifying each of the one or more user queries as one of (i) a localized query type and (ii) a distributed query type, using the LLM, wherein the localized query implies answer is in one sentence and the distributed query implies answer is obtained referring multiple sentences; determining an answer strategy based on the query type, wherein the answer strategy determines an approach to be used for answering the query; generating an answer for each of the one or more user queries using at least one of (i) the indexed corpus, and (ii) the LLM; and validating and refining the generated answer using the LLM.

In another embodiment of the method, generating the answer for each of the one or more user queries using at least one of (i) the indexed corpus, and (ii) the LLM, includes: identifying a set of relevant domain centric chunks amongst the plurality of domain centric chunks as the indexed corpus answer, by performing a semantic similarity match of each of the one or more queries with the indexed corpus; generating a set of prompts using the set of relevant domain centric chunks, the answer strategy, the refined query, and the domain model graph; passing the set of prompts to the LLM for generating LLM answer; and selecting one of an indexed corpus answer and the LLM answer as the answer for each of the one or more user queries based on a calculated confidence level associated with the LLM answer.

A system is provided. The system includes one or more hardware processors, a communication interface, and a memory storing a plurality of instructions, wherein the plurality of instructions cause the one or more hardware processors to receive a raw corpus data as input, wherein the raw corpus data is a domain specific data. Further, an indexed corpus is generated from the raw corpus data, wherein generating the indexed corpus includes: transforming the raw corpus data into an associated plain text document, wherein file type of the associated plain text document is determined based on a determined file type of the raw corpus data; normalizing the associated plain text document, comprising standardizing and cleaning the plain text document; generating a plurality of document chunks associated with the normalized associated plain text document by determining a document type of the plain text document based on a calculated keyword score and a large language model (LLM) score and performing a section-based chunking, a paragraph-based chunking and a sentence-based chunking on the plain text document to obtain the plurality of document chunks, based on the determined document type; generating a plurality of domain centric chunks from the plurality of document chunks using a domain model graph and the LLM, wherein the domain model graph comprises a set of associations and a root node; aggregating the plurality of domain centric chunks by grouping similar chunks from the plurality of domain centric chunks; and generating the indexed corpus by performing indexing on the aggregated plurality of domain centric chunks using vector embeddings.

In an embodiment of the system, the raw corpus data comprises of a collection of textual data pertaining to a specific domain, wherein the textual data may comprise journals, papers, data sources, and legal documents.

In another embodiment of the system, determining the document type of the plain text document based on the calculated keyword score and the large language model (LLM) score includes: calculating a keyword match score for each document type based on a keyword match count and a total number of keywords for each document type using a pre-defined dictionary of keywords associated with each document type; creating a prompt using a pre-defined number of tokens from the plain text document; and prompting the LLM using the created prompt to obtain the LLM score for each document type, wherein prompting the LLM includes: calculate a mean score for each document type using the LLM score and the keyword match score; and identify the document type with highest mean score from among a plurality of document types.

In another embodiment of the system, performing the section-based chunking, the paragraph-based chunking, and the sentence-based chunking on the plain text document to obtain the plurality of document chunks, based on the determined document type, includes: dividing the plain text document into a plurality of sections using a predefined template; identifying a plurality of paragraphs if a section amongst the plurality of sections exceeds a predefined section size; and identifying a plurality of sentences if a paragraph amongst the plurality of paragraphs exceeds a predefined paragraph size, wherein, the plurality of sections, the plurality of paragraphs, and the plurality of sentences form the plurality of document chunks.

In another embodiment of the system, generating the plurality of domain centric chunks from the plurality of document chunks using the domain model graph and the LLM, comprises performing a depth first search (DFS) on the domain model graph by traversing a set of associations and using a set of prompts to generate the plurality of document chunks.

In another embodiment of the system, the generated index corpus is used to generate response to one or more user queries, by: receiving the one or more user queries with respect to a specific domain; validating and refining the one or more user queries using the domain model graph and the LLM score, by collecting a list of key entities and immediate neighbors from the domain model graph, generating the keyword score if one or more of the key entities are present in the one or more user queries, generate the LLM score using a prompt, find a weighted mean score from the keyword score and the LLM score, determining each of the one or more user queries as valid, if the weighted mean score is greater than a predefined threshold, and refining the validated query using the LLM with prompt; classifying each of the one or more user queries as one of (i) a localized query type and (ii) a distributed query type, using the LLM, wherein the localized query implies answer is in one sentence and the distributed query implies answer is obtained referring multiple sentences; determining an answer strategy based on the query type, wherein the answer strategy determines an approach to be used for answering the query; generating an answer for each of the one or more user queries using at least one of (i) the indexed corpus, and (ii) the LLM; and validating and refining the generated answer using the LLM.

In another embodiment of the system, generating the answer for each of the one or more user queries using at least one of (i) the indexed corpus, and (ii) the LLM, includes: identifying a set of relevant domain centric chunks amongst the plurality of domain centric chunks as the indexed corpus answer, by performing a semantic similarity match of each of the one or more queries with the indexed corpus; generating a set of prompts using the set of relevant domain centric chunks, the answer strategy, the refined query, and the domain model graph; passing the set of prompts to the LLM for generating LLM answer; and selecting one of an indexed corpus answer and the LLM answer as the answer for each of the one or more user queries based on a calculated confidence level associated with the LLM answer.

In yet another aspect, a non-transitory computer readable medium is provided. The non-transitory computer readable medium includes a plurality of instructions, which when executed, causes one or more hardware processors to receive a raw corpus data as input, wherein the raw corpus data is a domain specific data. Further, an indexed corpus is generated from the raw corpus data, wherein generating the indexed corpus includes: transforming the raw corpus data into an associated plain text document, wherein file type of the associated plain text document is determined based on a determined file type of the raw corpus data; normalizing the associated plain text document, comprising standardizing and cleaning the plain text document; generating a plurality of document chunks associated with the normalized associated plain text document by determining a document type of the plain text document based on a calculated keyword score and a large language model (LLM) score and performing a section-based chunking, a paragraph-based chunking and a sentence-based chunking on the plain text document to obtain the plurality of document chunks, based on the determined document type; generating a plurality of domain centric chunks from the plurality of document chunks using a domain model graph and the LLM, wherein the domain model graph comprises a set of associations and a root node; aggregating the plurality of domain centric chunks by grouping similar chunks from the plurality of domain centric chunks; and generating the indexed corpus by performing indexing on the aggregated plurality of domain centric chunks using vector embeddings.

In an embodiment of the non-transitory computer readable medium, the raw corpus data comprises of a collection of textual data pertaining to a specific domain, wherein the textual data may comprise journals, papers, data sources, and legal documents.

In another embodiment of the non-transitory computer readable medium, determining the document type of the plain text document based on the calculated keyword score and the large language model (LLM) score includes: calculating a keyword match score for each document type based on a keyword match count and a total number of keywords for each document type using a pre-defined dictionary of keywords associated with each document type; creating a prompt using a pre-defined number of tokens from the plain text document; and prompting the LLM using the created prompt to obtain the LLM score for each document type, wherein prompting the LLM includes: calculate a mean score for each document type using the LLM score and the keyword match score; and identify the document type with highest mean score from among a plurality of document types.

In another embodiment of the non-transitory computer readable medium, performing the section-based chunking, the paragraph-based chunking, and the sentence-based chunking on the plain text document to obtain the plurality of document chunks, based on the determined document type, includes: dividing the plain text document into a plurality of sections using a predefined template; identifying a plurality of paragraphs if a section amongst the plurality of sections exceeds a predefined section size; and identifying a plurality of sentences if a paragraph amongst the plurality of paragraphs exceeds a predefined paragraph size, wherein, the plurality of sections, the plurality of paragraphs, and the plurality of sentences form the plurality of document chunks.

In another embodiment of the non-transitory computer readable medium, generating the plurality of domain centric chunks from the plurality of document chunks using the domain model graph and the LLM, comprises performing a depth first search (DFS) on the domain model graph by traversing a set of associations and using a set of prompts to generate the plurality of document chunks.

In another embodiment of the non-transitory computer readable medium, the generated index corpus is used to generate response to one or more user queries, by: receiving the one or more user queries with respect to a specific domain; validating and refining the one or more user queries using the domain model graph and the LLM score, by collecting a list of key entities and immediate neighbors from the domain model graph, generating the keyword score if one or more of the key entities are present in the one or more user queries, generate the LLM score using a prompt, find a weighted mean score from the keyword score and the LLM score, determining each of the one or more user queries as valid, if the weighted mean score is greater than a predefined threshold, and refining the validated query using the LLM with prompt; classifying each of the one or more user queries as one of (i) a localized query type and (ii) a distributed query type, using the LLM, wherein the localized query implies answer is in one sentence and the distributed query implies answer is obtained referring multiple sentences; determining an answer strategy based on the query type, wherein the answer strategy determines an approach to be used for answering the query; generating an answer for each of the one or more user queries using at least one of (i) the indexed corpus, and (ii) the LLM; and validating and refining the generated answer using the LLM.

In another embodiment of the non-transitory computer readable medium, generating the answer for each of the one or more user queries using at least one of (i) the indexed corpus, and (ii) the LLM, includes: identifying a set of relevant domain centric chunks amongst the plurality of domain centric chunks as the indexed corpus answer, by performing a semantic similarity match of each of the one or more queries with the indexed corpus; generating a set of prompts using the set of relevant domain centric chunks, the answer strategy, the refined query, and the domain model graph; passing the set of prompts to the LLM for generating LLM answer; and selecting one of an indexed corpus answer and the LLM answer as the answer for each of the one or more user queries based on a calculated confidence level associated with the LLM answer.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for domain-driven knowledge augmented question answering, according to some embodiments of the present disclosure.
FIGS. 2A, 2B, 2C (collectively referred to as FIG. 2) represent functional block diagrams of the system of FIG. 1, according to some embodiments of the present disclosure.
FIG. 3 is a flow diagram depicting steps involved in the process of generating an indexed corpus for the domain-driven knowledge augmented question answering, using the system of FIG. 1, in accordance with some embodiments of the present disclosure.
FIG. 4 is a flow diagram depicting steps involved in the process of determining document type of a plain text document based on a calculated keyword score and a large language model (LLM) score, using the system of FIG. 1, in accordance with some embodiments of the present disclosure.
FIG. 5 is a flow diagram depicting steps involved in the process of obtaining a plurality of document chunks, based on the determined document type, using the system of FIG. 1, in accordance with some embodiments of the present disclosure.
FIGS. 6A and 6B (collectively referred to as FIG. 6) is a flow diagram depicting steps involved in the process of generating response to one or more user queries using generated index corpus, using the system of FIG. 1, in accordance with some embodiments of the present disclosure.
FIG. 7 is a flow diagram depicting steps involved in the process of generating the response for each of the one or more user queries using at least one of the indexed corpus and the LLM, using the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the age of information, quick and accurate access to knowledge is of paramount importance. Question-Answering (QA) systems play a pivotal role in this endeavor. These systems, powered by advanced architectures, enable users to obtain precise answers to their queries. One such architecture, driven by the understanding of specific domains, bridges the gap between raw data and insightful responses.

In order to address these challenges, a method and system for domain-driven knowledge augmented question answering are provided. The system receives a raw corpus data as input, wherein the raw corpus data is a domain specific data. Further, an indexed corpus is generated from the raw corpus data, wherein generating the indexed corpus includes: transforming the raw corpus data into an associated plain text document, wherein file type of the associated plain text document is determined based on a determined file type of the raw corpus data; normalizing the associated plain text document, comprising standardizing and cleaning the plain text document; generating a plurality of document chunks associated with the normalized associated plain text document by determining a document type of the plain text document based on a calculated keyword score and a large language model (LLM) score and performing a section-based chunking, a paragraph-based chunking and a sentence-based chunking on the plain text document to obtain the plurality of document chunks, based on the determined document type; generating a plurality of domain centric chunks from the plurality of document chunks using a domain model graph and the LLM, wherein the domain model graph comprises a set of associations and a root node; aggregating the plurality of domain centric chunks by grouping similar chunks from the plurality of domain centric chunks; and generating the indexed corpus by performing indexing on the aggregated plurality of domain centric chunks using vector embeddings. The system uses the index corpus to generate answers for questions received from users. In this approach, by integrating domain models the retrieval process is optimized, which in turn improves efficiency of the retrieval process, this addressing the challenges in the existing approaches.

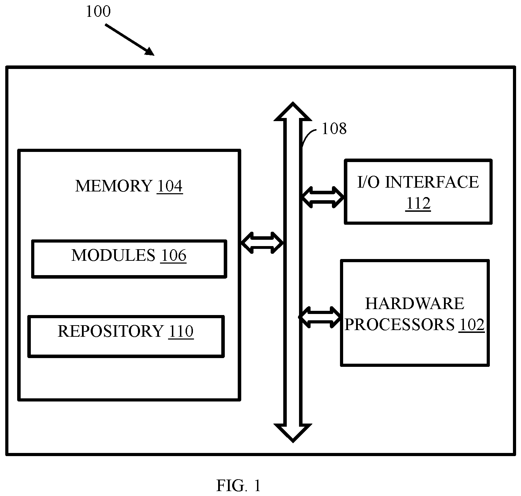

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 illustrates an exemplary system for domain-driven knowledge augmented question answering, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the domain-driven knowledge augmented question answering. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the domain-driven knowledge augmented question answering.

The data repository (or repository) 110 may include a plurality of abstracted piece of code for refinement and data that is processed, received, or generated as a result of the execution of the plurality of modules in the module(s) 106.

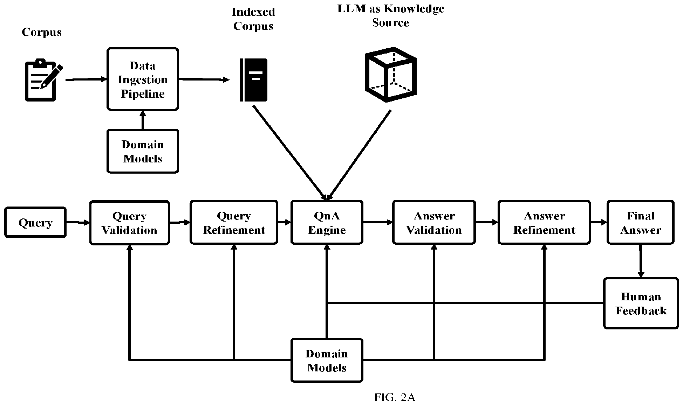

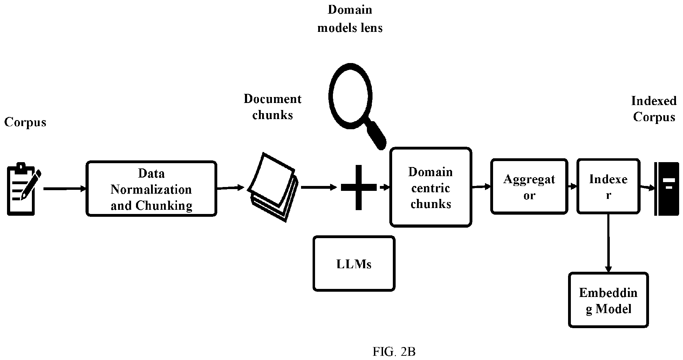

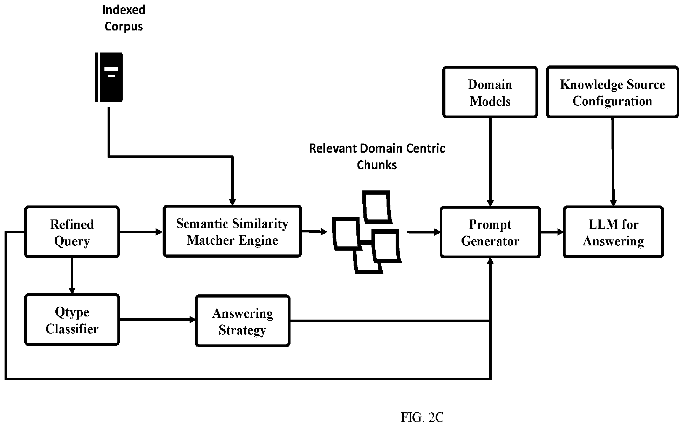

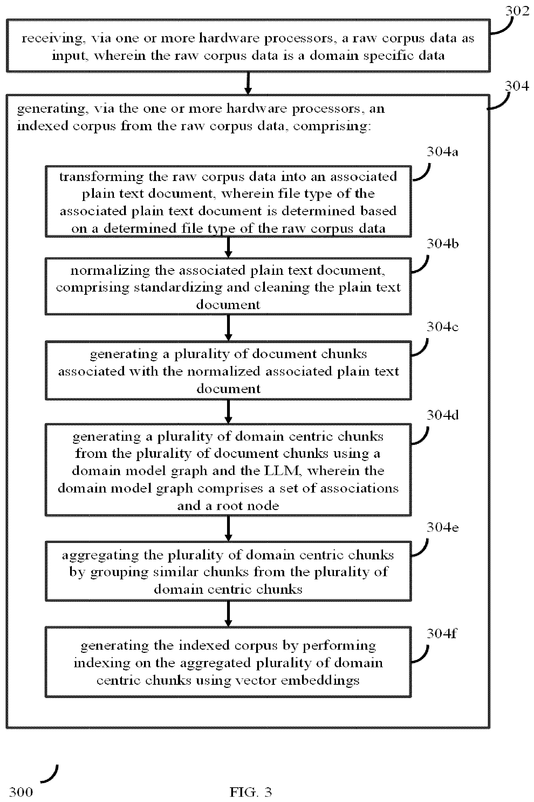

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the functional block diagrams in FIG. 2, and steps in flow diagrams in FIG. 3 through FIG. 7.

FIGS. 2A, 2B, 2C (collectively referred to as FIG. 2) represent functional block diagrams of the system of FIG. 1, according to some embodiments of the present disclosure.

Different components of the system 100, in the example functional architecture as depicted in FIG. 2 are explained below:
Corpus: The corpus is a comprehensive collection of text and data relevant to a specific domain or knowledge area, which acts as an initial data source.

Data Ingestion Pipeline: From the corpus, the data needs to be structured and prepared for further processing. The data ingestion pipeline is responsible for normalizing, chunking, extracting, cleaning, and organizing the data. The data ingestion pipeline is guided by domain models, which act as the lens through which the information from the corpus is extracted. The domain models help contextualize the corpus to a specific domain, thereby enabling the system 100 to perform the retrieval with sufficient contextual understanding. Document chunking done at this stage is based on type of document, for example, scientific papers are chunked by sections like abstract, methodology, results, etc., whereas legal documents are chunked based on clauses, articles, or sections. The data ingestion pipeline is further detailed in FIG. 2B, and is explained hereafter.

File Type Conversion and Text Normalization: This component handles file type conversion and text normalization together. Depending on the file type (e.g., PDF, DOC, XLS), the data is transformed into plain text, and text normalization tasks are applied to standardize and clean the text. This ensures that the content is consistent and ready for further processing.

Chunking based on File Type: This component performs document/data chunking based on the specific file type. Different types of documents may have distinct structures, so the chunking strategy is tailored to the file type. Chunking breaks the data into manageable units based on the file's structure.

Aggregator: This component aggregates similar or related chunks. Aggregation reduces redundancy and improves data organization. For example, if multiple chunks contain information about the same concept or topic, they can be grouped together, creating a more coherent view of the knowledge, thereby allowing for more efficient context retrieval for Answering questions.

Indexer: This component may use vector embeddings to represent content different chunks. The vector embeddings encode the semantic meaning of the text, allowing for more efficient and context-aware retrieval of information. An index is created to map the embeddings to the corresponding chunks.

Indexed Corpus: The indexed corpus generated as output of the data ingestion pipeline serves as a structured and optimized knowledge repository.

Query Validation and Refinement: This component validates and refines user queries based on the domain models, so as to better understand user intent and clarify ambiguous questions. The component may use common entity match score along with LLM scores for query validation.

Q&A Engine: The Q&A engine is designed to generate answers. It leverages knowledge context from the indexed corpus and, a Large Language Model (LLM) as an additional knowledge Source (KS). The engine's ability to understand the domain-specific context is crucial for providing relevant and accurate answers. The Q&A engine can use the following combination of indexed corpus or LLM as Knowledge Source (KS):- Only LLM as KS, Only Indexed Corpus, Fallback to LLM when answer not found in indexed corpus, use both Indexed Corpus and LLM to construct a composite answer. The Strategy to answer depends on the Question type. If the query expects a list, a map-reduce based approach may be helpful, whereas if the query is factual stuffing-based approach would work better, and so on. Details of the Q&A engine are captured in FIG. 2C, and are explained hereafter.

Refined Query: The refined query is obtained by performing validation and refinement of a user query.

Semantic Similarity Using Indexed Corpus: This component uses the indexed corpus to perform semantic similarity calculations, during which it compares the refined query to the content of the indexed corpus to identify the top K (e.g., most relevant) domain-centric chunks that match the query.

QType classifier: The Qtype classifier component categorizes user queries into specific types, allowing the system 100 to apply contextually appropriate strategies for answering, thereby improving the accuracy and relevance of responses. The user queries may be localized and/or distributed.

Answering Strategy: This component employs an answering strategy which is influenced by several factors, including the type of query (e.g., localized, non-localized, etc.), the refined query itself, and the domain models. This answering strategy helps determine the approach to be used for answering the query most effectively. For example, for a localized query, a stuffing strategy maybe employed, whereas for a non-localized query, mad-reduce or filter approach maybe applied.

Prompt Generator: This component uses identified relevant domain-centric chunks, the answering strategy based on the query type, the refined query, and the domain models, so as to generate prompts to query the LLM to generate answers to the user queries.

LLM for Answering: The LLM uses the prompts to produce detailed and contextually relevant answers to the user's query.

Knowledge Source Configuration: This component decides whether to use the LLM-generated answers as the primary knowledge source for responding to the user's query. The choice may depend on factors like the confidence level in the LLM-generated answers and the need for a fallback option.

Answer Refinement and Validation: The answer refinement and validation component refines and validates the answer/response generated by the Q&A engine, to ensure that the answers are contextually sound, precise, and meet the user's expectations.

FIG. 3 is a flow diagram depicting steps involved in the process of generating an indexed corpus for the domain-driven knowledge augmented question answering, using the system of FIG. 1, in accordance with some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of method 300 in FIG. 3, the system 100 receives a raw corpus data as input. The raw corpus data is a domain specific data. The system 100 may receive the input from one or more data sources, via appropriate channels provided by the communication interface 112. In an embodiment, the raw corpus data comprises of a collection of textual data pertaining to a specific domain, wherein the textual data may comprise journals, papers, data sources, and legal documents.

Further, at step 304 of the method 300, the system 100 generates an indexed corpus from the raw corpus data. Various steps involved in the process of generating the indexed corpus are depicted in steps 304 through 304f, and are explained hereafter.

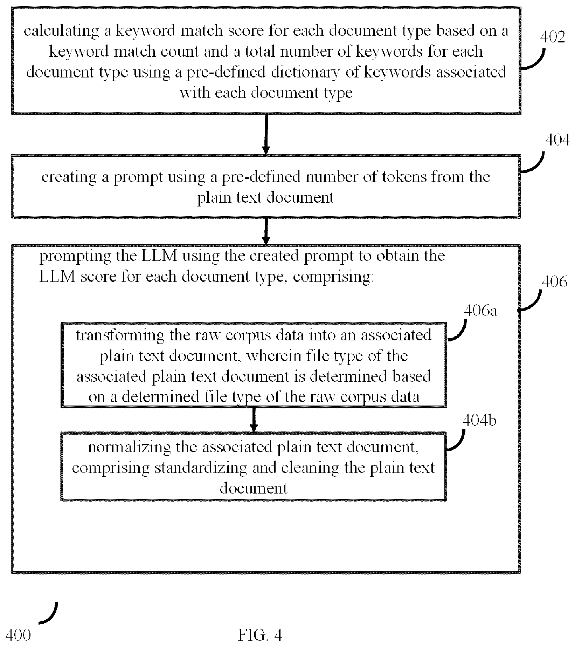

At step 304a, the system 100 transforms the raw corpus data into an associated plain text document. At this step, the system 100 may determine file type (also referred to as 'document type') of the plain text document. Various steps involved in the process of determining the document type of the plain text document based on the calculated keyword score and the large language model (LLM) score are depicted in method 400 in FIG. 4, and are explained hereafter. At step 402 of the method 400, the system 100 calculates a keyword match score for each document type based on a keyword match count and a total number of keywords for each document type using a pre-defined dictionary of keywords associated with each document type. For example, consider that there are 10 keywords in total, and a total of 7 keywords matched. Then the keyword match score is 0.7 (i.e., 7/10). Further, at step 404 of the method 400, the system 100 creates a prompt using a pre-defined number of tokens from the plain text document. Further, at step 406 of the method 400, the system 100 prompts the LLM using the created prompt to obtain the LLM score for each document type. Prompting the LLM includes calculation of a mean score for each document type using the LLM score and the keyword match score, and identification of the document type with highest mean score from among a plurality of document types. Consider the example below:

```
{"Paper": ["abstract", "introduction", "methodology", "discussions",
  "conclusion", "references", "study", "experiment", ...], "Book": ["chapter",
  "table of contents", "preface", "index", "foreword", "acknowledgements",...],
  ...}
```

In this example, the keyword match score is found as keyword match count divided total keywords for a specific document type. This gives scores for each document type, for example paper score, books core, etc. Further, the prompt is created by taking the pre-defined number of tokens (for example, first 500 token of a document) as follows:
Given the following text in three backticks classify it as paper or book along with a probability score between 0 and 1 for all categories. Respond as {"text type": "Paper|Book", "probabilities": "probability Value between 0 and 1 for each category" }.
text: ‴ This is the abstract for a paper titled evolution of humansʺʺ

This results in a JSON format is as follows:

```
{"text type": "Paper", "probabilities": {"Paper": 0.95, "Book": 0.05}}
```

Further, a mean score for each document type is created using LLM score (i.e., probabilities) and the keyword-based score, and the document type with best mean score is selected as the document type.

Further, at step 304b, the system 100 normalizes the associated plain text document so as to make the document suitable for further processing. The system 100 may perform standardization and cleaning the plain text document as part of the normalization, using any suitable technique. Some examples of the standardization and cleaning techniques are, but not limited to, stop word removal, abbreviation expansion, synonym replacement, and handling special characters. At this stage, the system 100 may standardize contents, format, and so on, of the plain text document to a format as required (or is supported) by the system 100 for further processing.

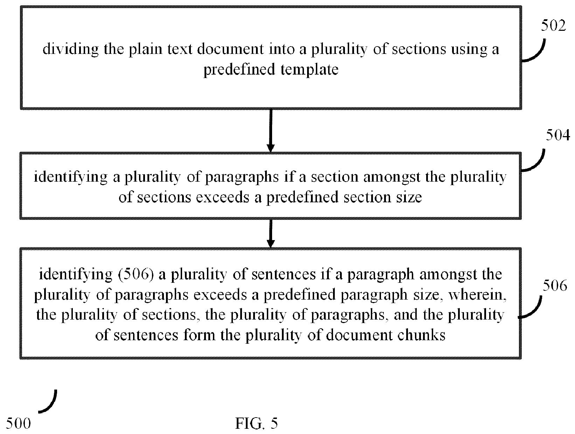

Further, at step 304c, the system 100 generates a plurality of document chunks associated with the normalized associated plain text document. At this step, the system 100 initially determines a document type of the plain text document based on a calculated keyword score and a large language model (LLM) score and performs a section-based chunking, a paragraph-based chunking, and a sentence-based chunking on the plain text document to obtain the plurality of document chunks, based on the determined document type. The sections, the paragraphs, and the sentences form the document chunks. Various steps involved in the process of performing the section-based chunking, the paragraph-based chunking, and the sentence-based chunking on the plain text document to obtain the plurality of document chunks, based on the determined document type, are depicted in method 500 in FIG. 5, and are explained hereafter.

At step 502 of the method 500, the system 100 divides the plain text document into a plurality of sections using a predefined template. The system 100 may perform the division to the different sections based on section headers. For example, a technical document may have a summary, results, experimental setup and so on. At this stage, various such sections are identified and are segregated accordingly. Sections are larger divisions within the document that typically represent different topics or themes. The system 100 may use a template-based approach to identify different sections in the document, and accordingly perform the section chunking. In this approach, the template guides the identification of these sections, and they include titles, subtitles, or other structural cues. The system 100 may use keywords used in document type dictionary to create regular expression-based patterns to identify and crop relevant chunks from different type of documents. For example, from first occurrence of the keyword "abstract" until the next keyword, the system may crop to form a chunk containing the abstract section. Likewise, the other sections also are identified and chunked. Further, at step 504 of the method 500, the system 100 identifies a plurality of paragraphs if a section amongst the plurality of sections exceeds a predefined section size. Paragraphs are cohesive blocks of text that discuss a specific idea or concept. Chunking at this level helps in isolating individual thoughts or topics within a section. In various embodiments, the section size maybe pre-defined or dynamically defined as per requirements. Further, at step 506 of the method 500, the system 100 identifies a plurality of sentences if a paragraph amongst the plurality of paragraphs exceeds a predefined paragraph size, by performing the sentence-based chunking. The sentence-based chunking is most granular level of chunking as compared to the section-based chunking and the paragraph-based chunking. Analyzing text at the sentence level allows for more detailed understanding and processing of the content.

Further, at step 304d, the system 100 generates a plurality of domain centric chunks from the plurality of document chunks using a domain model graph and the LLM. The domain model graph comprises of a set of associations and a root node. At this step, the system 100 performs a depth first search (DFS) on the domain model graph by traversing a set of associations, and then uses a set of prompts to generate the plurality of document chunks. Generating the domain-centric chunks involves examining each of the plurality of document chunks, using specific domain models. For instance, if focus of the system 100 is on extracting information related to incidents and the corresponding remedial actions taken, each chunk is analyzed using an "Incident and Recovery" domain model. This means that the content within each of the plurality of document chunks is evaluated with a specific emphasis on identifying incidents and understanding the steps taken to address them, aligning with each criterion defined in the "Incident and Recovery" model. This is done to ensure that each document chunk is processed in a way that is closely aligned with the domain's structure and content, allowing the system 100 to efficiently retrieve and provide precise answers. Consider the example below:
Prompt 1:
   From the text in three backticks extract all the FailureMode(s). A FailureMode is defined as `A FailureMode is a specific way in which a system or process can malfunction or fail. Understanding these potential failures is crucial in engineering and design to improve reliability and safety'. Respond with a comma separated list of FailureModes(s). text: ‴Some failure related text‴
Prompt 2:
   Association Name: FailureMode-Cause
   Association definition: A FailureMode can occur due to multiple reasons
   (Causes), reflecting a nuanced relationship. Recognizing these various factors is vital for thorough analysis, enabling the implementation of effective preventive measures to bolster overall system resilience.
   What are the Cause(s) for FailureMode `equipment downtime due to mechanical failures' in the text mentioned in three backticks.
   Here a 'Cause' is defined as `A Cause is the factor or circumstance that triggers or contributes to a specific event, such as a failure mode, providing insight into the underlying reasons for the occurrence.'.
   Respond with a comma separated list of Cause(s).
   text: ‴Some failure related text‴

Further, at step 304e, the system 100 aggregates the plurality of domain centric chunks by grouping similar chunks from the plurality of domain centric chunks. Here, the term 'similar chunks' refers to chunks that contain text on same topic, which maybe domain centric chunks. For example, consider that there are two chunks which contain information on same failure mode, but with different causes. The two chunks can be merged by adding one or more causes to a causes list associated with the chunks, and then the second chunk can be dropped to avoid repetition. This in turn helps achieve higher retrieval accuracy, as only one chunk is to be retrieved instead of two. Further, at step 304f, the system 100 generates the indexed corpus by performing indexing on the aggregated plurality of domain centric chunks using vector embeddings.

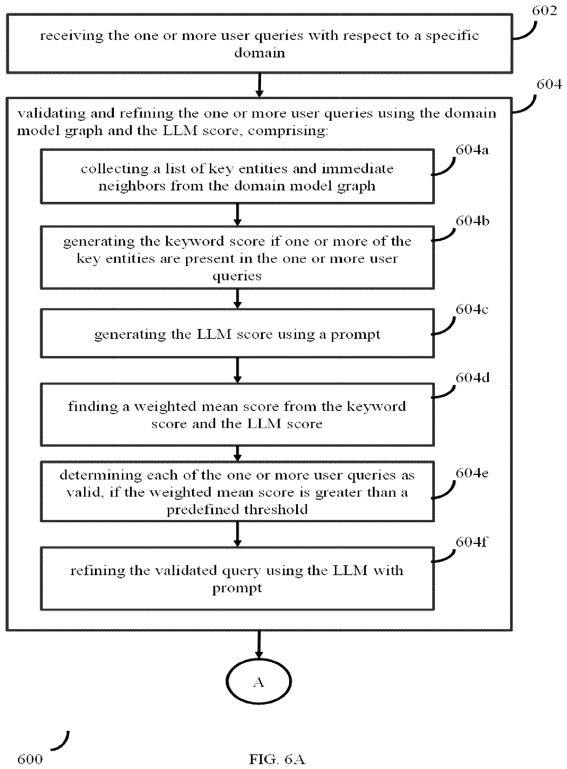

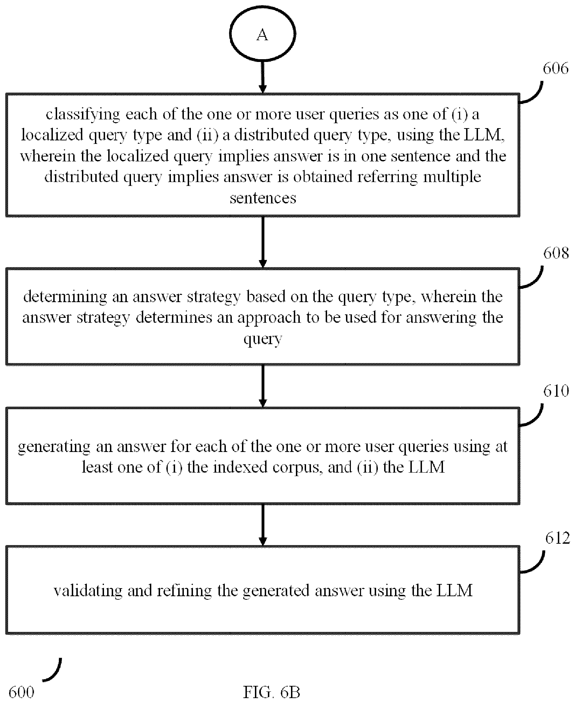

Once the indexed corpus is generated, the system 100 may further use the indexed corpus to generate response to one or more user queries. Various steps involved in the process of generating the response to the one or more user queries using the indexed corpus are depicted in method 600 in FIG. 6, and are explained hereafter. At step 602 of the method 600, the system 100 receives the one or more user queries with respect to a specific domain. Further, at step 604 of the method 700, the system 100 validates and refines the one or more user queries using the domain model graph and the LLM score. Various steps involved in the process of validating and refining the one or more user queries are depicted in steps 604a through 604f, and are explained hereafter.

At step 604a, the system 100 collects a list of key entities and immediate neighbours from the domain model graph. The system 100 may use suitable graph traversal mechanism for traversing the domain model graph. Further, at step 604b, the system 100 generates the keyword score if one or more of the key entities are present in the one or more user queries. Further, at step 604c, the system 100 generates the LLM score using a prompt. Further, at step 604d, the system 100 finds a weighted mean score from the keyword score and the LLM score. Further, at step 604e, the system 100 determines each of the one or more user queries as valid, if the weighted mean score is greater than a predefined threshold. The weighted mean score maybe calculated as:
Weighted Mean Score = (KW Score + 3 * LLM Score / 4)
Consider the example below:
   Query: What are the causes for gripper malfunction?
   Key entities : FailureMode, Causes, Detection, Actions
   KW score 1, LLM Score: 0.75, weighted mean score: 0.85
   Threshold: 0. 7
   Weighted Mean score > Threshold, hence a valid query for the domain

Further, at step 604f, the system 100 refines the validated query using the LLM with prompt. Consider the example below:
Query: what are the reasons for gripper malfunction?
Refined Query: what are the potential causes (FailureMode-Cause) for gripper malfunction (FailureMode)?

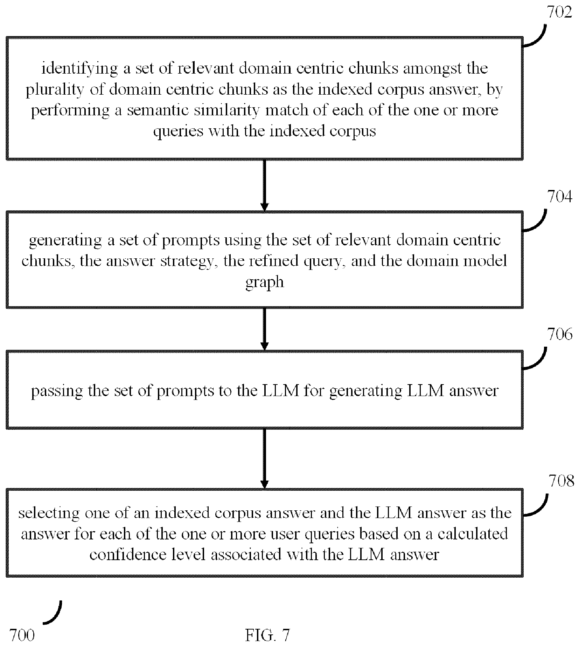

Further, at step 606 of the method 600, the system 100 classifies each of the one or more user queries as one of (i) a localized query type and (ii) a distributed query type, using the LLM. The localized query implies answer is in one sentence and the distributed query implies that the answer is obtained referring multiple sentences. Further, at step 608 of the method 600, the system 100 determines an answer strategy based on the query type. The answer strategy determines an approach to be used for answering the query. Further, at step 610 of the method 600, the system 100 generates an answer for each of the one or more user queries using at least one of (i) the indexed corpus, and (ii) the LLM. Various steps involved in the process of generating the answer for each of the one or more user queries are depicted in method 700 in FIG. 7, and are explained hereafter.

At step 702 of the method 700, the system 100 identifies a set of relevant domain centric chunks amongst the plurality of domain centric chunks as an indexed corpus answer, by performing a semantic similarity match of each of the one or more queries with the indexed corpus. Further, at step 704 of the method 700, the system 100 generates a set of prompts using the set of relevant domain centric chunks, the answer strategy, the refined query, and the domain model graph. Further, at step 706 of the method 700, the system 100 passes the set of prompts to the LLM for generating LLM answer. The system 100 thus gets two answers, i.e., the indexed corpus answer and the LLM answer. Further, at step 708 of the method 700, the system 100 selects one of an indexed corpus answer and the LLM answer as the answer for each of the one or more user queries based on a calculated confidence level associated with the LLM answer. The confidence score indicates/represents relevance of the answer with respect to the question received. While the domain centric chunks are obtained from the documents, in an embodiment it is possible that required answer is not there in these chunks. In such cases, the system 100 may retrieve the answer from LLM Knowledge. In another embodiment, the system 100 may use a combination of LLM knowledge + index corpus to generate the answer. In yet another embodiment, the system 100 may generate multiple answers for the user query, at least one each using each of the aforementioned approaches, and from among the generated answers, one with highest value of the confidence score maybe given to the user.

Referring back to the method 600, at step 612 of the method 600, the system 100 validates and refines the generated answer using the LLM.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of augmented question answering. The embodiment, thus provides a method and system for domain-driven knowledge augmented question answering in which an indexed corpus is generated for a given row data corpus. Moreover, the embodiments herein further provide a mechanism which uses the indexed corpus to process user queries and generate response.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving (302), via one or more hardware processors, a raw corpus data as input, wherein the raw corpus data is a domain specific data; and
generating (304), via the one or more hardware processors, an indexed corpus from the raw corpus data, comprising:
transforming (304a) the raw corpus data into an associated plain text document, wherein a file type of the associated plain text document is determined based on a determined file type of the raw corpus data;
normalizing (304b) the associated plain text document, comprising standardizing and cleaning the plain text document;
generating (304c) a plurality of document chunks associated with the normalized associated plain text document, comprising:
determining a document type of the plain text document based on a calculated keyword score and a large language model (LLM) score; and
performing a section-based chunking, a paragraph-based chunking and a sentence-based chunking on the plain text document to obtain the plurality of document chunks, based on the determined document type;
generating (304d) a plurality of domain centric chunks from the plurality of document chunks using a domain model graph and the LLM, wherein the domain model graph comprises a set of associations and a root node;
aggregating (304e) the plurality of domain centric chunks by grouping similar chunks from the plurality of domain centric chunks; and
generating (304f) the indexed corpus by performing indexing on the aggregated plurality of domain centric chunks using vector embeddings.

2. The method as claimed in claim 1, wherein the raw corpus data comprises of a collection of textual data pertaining to a specific domain, wherein the textual data may comprise journals, papers, data sources, and legal documents.

3. The method as claimed in claim 1, wherein determining the document type of the plain text document based on the calculated keyword score and the LLM score comprises of:
calculating (402) a keyword match score for each document type based on a keyword match count and a total number of keywords for each document type using a pre-defined dictionary of keywords associated with each document type;
creating (404) a prompt using a pre-defined number of tokens from the plain text document; and
prompting (406) the LLM using the created prompt to obtain the LLM score for each document type, comprising:
calculate (406a) a mean score for each document type using the LLM score and the keyword match score; and
identify (406b) the document type with highest mean score from among a plurality of document types.

4. The method as claimed in claim 1, wherein performing the section-based chunking, the paragraph-based chunking, and the sentence-based chunking on the plain text document to obtain the plurality of document chunks, based on the determined document type, comprises:
dividing (502) the plain text document into a plurality of sections using a predefined template;
identifying (504) a plurality of paragraphs if a section amongst the plurality of sections exceeds a predefined section size; and
identifying (506) a plurality of sentences if a paragraph amongst the plurality of paragraphs exceeds a predefined paragraph size, wherein, the plurality of sections, the plurality of paragraphs, and the plurality of sentences form the plurality of document chunks.

5. The method as claimed in claim 1, wherein generating the plurality of domain centric chunks from the plurality of document chunks using the domain model graph and the LLM, comprises performing a depth first search (DFS) on the domain model graph by traversing a set of associations and using a set of prompts to generate the plurality of document chunks.

6. The method as claimed in claim 1, wherein the generated index corpus is used to generate response to one or more user queries, comprising:
receiving (602) the one or more user queries with respect to a specific domain; and
validating (604) and refining the one or more user queries using the domain model graph and the LLM score, comprising:
collecting (604a) a list of key entities and immediate neighbours from the domain model graph;
generating (604b) the keyword score if one or more of the key entities are present in the one or more user queries;
generating (604c) the LLM score using a prompt;
finding (604d) a weighted mean score from the keyword score and the LLM score;
determining (604e) each of the one or more user queries as valid, if the weighted mean score is greater than a predefined threshold; and
refining (604f) the validated query using the LLM with prompt;
classifying (606) each of the one or more user queries as one of (i) a localized query type and (ii) a distributed query type, using the LLM, wherein the localized query implies answer is in one sentence and the distributed query implies answer is obtained referring multiple sentences;
determining (608) an answer strategy based on the query type, wherein the answer strategy determines an approach to be used for answering the query;
generating (610) an answer for each of the one or more user queries using at least one of (i) the indexed corpus, and (ii) the LLM; and
validating (612) and refining the generated answer using the LLM.

7. The method as claimed in claim 6, wherein generating the answer for each of the one or more user queries using at least one of (i) the indexed corpus, and (ii) the LLM, comprises:
identifying (702) a set of relevant domain centric chunks amongst the plurality of domain centric chunks as the indexed corpus answer, by performing a semantic similarity match of each of the one or more queries with the indexed corpus;
generating (704) a set of prompts using the set of relevant domain centric chunks, the answer strategy, the refined query, and the domain model graph;
passing (706) the set of prompts to the LLM for generating LLM answer; and
selecting (708) one of an indexed corpus answer and the LLM answer as the answer for each of the one or more user queries based on a calculated confidence level associated with the LLM answer.

8. A system (100), comprising:
one or more hardware processors (102);
a communication interface (112); and
a memory (104) storing a plurality of instructions, wherein the plurality of instructions cause the one or more hardware processors to:
receive a raw corpus data as input, wherein the raw corpus data is a domain specific data; and
generate an indexed corpus from the raw corpus data, by:
transforming the raw corpus data into an associated plain text document, wherein a file type of the associated plain text document is determined based on a determined file type of the raw corpus data;
normalizing the associated plain text document, comprising standardizing and cleaning the plain text document;
generating a plurality of document chunks associated with the normalized associated plain text document, by:
determining a document type of the plain text document based on a calculated keyword score and a large language model (LLM) score; and
performing a section-based chunking, a paragraph-based chunking and a sentence-based chunking on the plain text document to obtain the plurality of document chunks, based on the determined document type;
generating a plurality of domain centric chunks from the plurality of document chunks using a domain model graph and the LLM, wherein the domain model graph comprises a set of associations and a root node;
aggregating the plurality of domain centric chunks by grouping similar chunks from the plurality of domain centric chunks; and
generating the indexed corpus by performing indexing on the aggregated plurality of domain centric chunks using vector embeddings.

9. The system as claimed in claim 8, wherein the raw corpus data comprises of a collection of textual data pertaining to a specific domain, wherein the textual data may comprise journals, papers, data sources, and legal documents.

10. The system as claimed in claim 8, wherein the one or more hardware processors are configured to determine the document type of the plain text document based on the calculated keyword score and the LLM score, by:
calculating a keyword match score for each document type based on a keyword match count and a total number of keywords for each document type using a pre-defined dictionary of keywords associated with each document type;
creating a prompt using a pre-defined number of tokens from the plain text document; and
prompting the LLM using the created prompt to obtain the LLM score for each document type, by:
calculate a mean score for each document type using the LLM score and the keyword match score; and
identify the document type with highest mean score from among a plurality of document types.

11. The system as claimed in claim 8, wherein the one or more hardware processors are configured to perform the section-based chunking, the paragraph-based chunking, and the sentence-based chunking on the plain text document to obtain the plurality of document chunks, based on the determined document type, by:
dividing the plain text document into a plurality of sections using a predefined template;
identifying a plurality of paragraphs if a section amongst the plurality of sections exceeds a predefined section size; and
identifying a plurality of sentences if a paragraph amongst the plurality of paragraphs exceeds a predefined paragraph size, wherein, the plurality of sections, the plurality of paragraphs, and the plurality of sentences form the plurality of document chunks.

12. The system as claimed in claim 8, wherein the one or more hardware processors are configured to generate the plurality of domain centric chunks from the plurality of document chunks using the domain model graph and the LLM, by performing a depth first search (DFS) on the domain model graph by traversing a set of associations and using a set of prompts to generate the plurality of document chunks.

13. The system as claimed in claim 8, wherein the one or more hardware processors are configured to use the index corpus to generate response to one or more user queries, by:
receiving the one or more user queries with respect to a specific domain;
validating and refining the one or more user queries using the domain model graph and the LLM score, by:
collecting a list of key entities and immediate neighbours from the domain model graph;
generating the keyword score if one or more of the key entities are present in the one or more user queries;
generating the LLM score using a prompt;
finding a weighted mean score from the keyword score and the LLM score;
determining each of the one or more user queries as valid, if the weighted mean score is greater than a predefined threshold; and
refining the validated query using the LLM with prompt;
classifying each of the one or more user queries as one of (i) a localized query type and (ii) a distributed query type, using the LLM, wherein the localized query implies answer is in one sentence and the distributed query implies answer is obtained referring multiple sentences;
determining an answer strategy based on the query type, wherein the answer strategy determines an approach to be used for answering the query;
generating an answer for each of the one or more user queries using at least one of (i) the indexed corpus, and (ii) the LLM; and
validating and refining the generated answer using the LLM.

14. The system as claimed in claim 13, wherein the one or more hardware processors are configured to generate the answer for each of the one or more user queries using at least one of (i) the indexed corpus, and (ii) the LLM, by:
identifying a set of relevant domain centric chunks amongst the plurality of domain centric chunks as the indexed corpus answer, by performing a semantic similarity match of each of the one or more queries with the indexed corpus;
generating a set of prompts using the set of relevant domain centric chunks, the answer strategy, the refined query, and the domain model graph;
passing the set of prompts to the LLM for generating LLM answer; and
selecting one of an indexed corpus answer and the LLM answer as the answer for each of the one or more user queries based on a calculated confidence level associated with the LLM answer.

15. One or more non-transitory machine-readable information storage mediums comprising one or more instructions which when executed by one or more hardware processors cause:
receiving a raw corpus data as input, wherein the raw corpus data is a domain specific data; and
generating an indexed corpus from the raw corpus data, comprising:
transforming the raw corpus data into an associated plain text document, wherein a file type of the associated plain text document is determined based on a determined file type of the raw corpus data;
normalizing the associated plain text document, comprising standardizing and cleaning the plain text document;
generating a plurality of document chunks associated with the normalized associated plain text document, comprising:
determining a document type of the plain text document based on a calculated keyword score and a large language model (LLM) score; and
performing a section-based chunking, a paragraph-based chunking and a sentence-based chunking on the plain text document to obtain the plurality of document chunks, based on the determined document type;
generating a plurality of domain centric chunks from the plurality of document chunks using a domain model graph and the LLM, wherein the domain model graph comprises a set of associations and a root node;
aggregating the plurality of domain centric chunks by grouping similar chunks from the plurality of domain centric chunks; and
generating the indexed corpus by performing indexing on the aggregated plurality of domain centric chunks using vector embeddings.
